# EUROPÄISCHE PATENTSCHRIFT

(11) **EP 2 753 816 B1**
(45) Veröffentlichungstag und Bekanntmachung des Hinweises auf die Patenterteilung: **22.04.2015**
(21) Anmeldenummer: 12751462.8
(22) Anmeldetag: 06.08.2012
(51) Int. Cl.: F02M 25/08, F02D 41/00

(54) **VERFAHREN ZUR DIAGNOSE EINES TANKENTLÜFTUNGSSYSTEMS**
METHOD FOR DIAGNOSING A TANK VENTILATION SYSTEM
PROCÉDÉ DE DIAGNOSTIC D'UN SYSTÈME DE PURGE DE RÉSERVOIR

(30) Priorität: 09.09.2011 DE 102011082439
(43) Veröffentlichungstag der Anmeldung: 16.07.2014
(73) Patentinhaber: Robert Bosch GmbH, 70442 Stuttgart (DE)
(72) Erfinder: HELLER, Friedemann, 70197 Stuttgart (DE); SENGER, Michael, 74392 Freudental (DE); HEUSER, Philip, 70186 Stuttgart (DE)
(86) Internationale Anmeldenummer: PCT/EP2012/065313
(87) Internationale Veröffentlichungsnummer: WO 2013/034380

(56) Entgegenhaltungen:
- WO-A1-2009/037150
- DE-A1-102005 045 434
- US-A1- 2006 243 258
- US-A1- 2011 146 391

## Beschreibung

Die vorliegende Erfindung betrifft ein Verfahren zur Diagnose eines Tankentlüftungssystems einer Verbrennungskraftmaschine, die einen Turbolader und einen Verdichter aufweist. Weiterhin betrifft die vorliegende Erfindung ein Computerprogramm, das alle Schritte des erfindungsgemäßen Verfahrens ausführt, wenn es auf einem Rechengerät abläuft. Schließlich betrifft die Erfindung ein Computerprogrammprodukt mit Programmcode, das auf einem maschinenlesbaren Träger gespeichert ist, zur Durchführung des erfindungsgemäßen Verfahrens, wenn das Programm auf einem Computer oder einem Steuergerät ausgeführt wird.

### Stand der Technik

Der Gesetzgeber sieht vor, dass Kraftstoffdämpfe, die im Kraftstofftank eines Kraftfahrzeugs, insbesondere eines Kraftfahrzeugs mit Benzinmotor, aufgrund Ausgasung entstehen, zwischengespeichert werden, um sie anschließend dem Verbrennungsprozess in einer Verbrennungskraftmaschine zuzuführen. Zur Zwischenspeicherung wird ein Aktivkohlebehälter benutzt. Dieser muss jedoch aufgrund seiner beschränkten Speicherkapazität während der Fahrt des Kraftfahrzeugs gespült werden. Hierzu wird Frischluft durch den Aktivkohlebehälter geleitet, die eingespeicherten Kraftstoffdämpfe werden desorbiert und das resultierende Kraftstoff/Luft-Gemisch wird gezielt der Verbrennung zugeführt. Dieser gesamte Prozess basiert auf einem Druckgefälle zwischen der Umgebung und der Ansaugstrecke der Verbrennungskraftmaschine. Somit kann eine Spülung des Aktivkohlebehälters nur bei Vorhandensein eines solchen Druckgefälles zwischen Umgebung und Ansaugstrecke stattfinden. Dieses Druckgefälle besteht jedoch bei aufgeladenen Verbrennungskraftmaschinen bzw. bei Verbrennungskraftmaschinen mit Verdichtern nur sehr bedingt im unteren Teillastbetrieb. Um auch bei diesen Motorkonzepten eine ausreichende Regeneration des Aktivkohlebehälters im Fahrbetrieb garantieren zu können, wurden sogenannte Venturi-Systeme eingeführt, welche auch im aufgeladenen Betrieb durch eine Bypassleitung in einer Venturidüse einen Unterdruck generieren können, welcher dann für die Spülung des Aktivkohlebehälters verwendet werden kann. Ein Beispiel eines solches Tankentlüftungssystem ist in der DE-10 2005 045434 gezeigte.

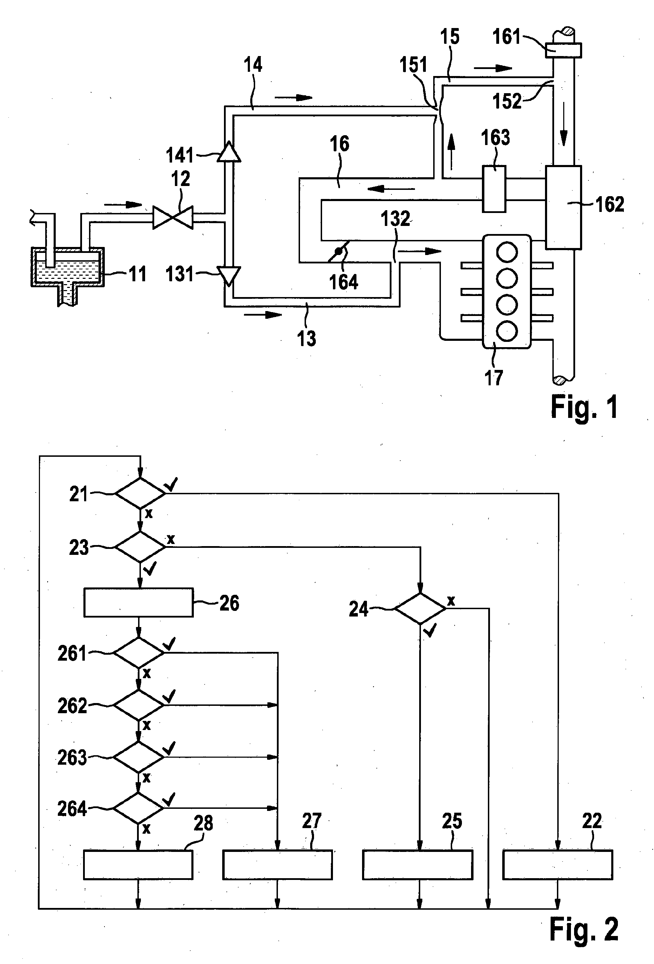

Ein solches Tankentlüftungssystem ist in Fig. 1 für eine aufgeladene Verbrennungskraftmaschine dargestellt. Ein Aktivkohlebehälter 11 ist mit einem Tankentlüftungsventil 12 verbunden. Vom Tankentlüftungsventil 12 zweigen zwei Leitungen 13, 14 ab, um das Kraftstoff/Luft-Gemisch in die Ansaugstrecke 16 einer Verbrennungskraftmaschine 17 einzuleiten. Die erste Leitung 13 enthält ein Rückschlagventil 131 und endet an einer Einleitstelle 132 zwischen der Verbrennungskraftmaschine 17 und einer Drosselklappe 164 in der Ansaugstrecke 16. Die zweite Leitung 14 enthält ein Rückschlagventil 141 und endet in der Venturidüse 151. Von der Venturidüse geht eine Verbindungsleitung 15 aus, die an einer zweiten Einleitstelle 152 in der Ansaugstrecke 16 zwischen einem Luftfilter 161 und einem Turbolader 162 endet. Zwischen einem Ladeluftkühler 163 und der Drosselklappe 164 verzweigt sich die Ansaügstrecke 16 in einen ersten Teil, der in der Venturidüse 151 endet und einen zweiten Teil, der in der Verbrennungskraftmaschine 17 endet.

In den Vereinigten Staaten von Amerika schreibt der Gesetzgeber weiterhin vor, dass die Systeme zur Regeneration des Aktivkohlebehälters 11 auf Funktionsfähigkeit überwacht werden müssen. Zu diesen Systemen gehört neben dem Tankentlüftungsventil 12 auch die Verschlauchung, d.h. das Leitungssystem 13, 14, 15, das zum Transport des Kraftstoff/Luft-Gemisches benutzt wird. Defekte innerhalb des gesamten Systems müssen somit erkannt werden. Die hierzu verwendete Diagnosefunktion basiert auf einem sich ausbildenden Unterdruck im Kraftstofftank, wenn das Tankentlüftungsventil 12 geöffnet wird. Kann das Ventil 12 nicht geöffnet werden bzw. liegt ein Defekt im Leitungssystem vor, bildet sich im Tank kein Unterdruck aus und das System wird als defekt erkannt.

Da dieses Diagnoseprinzip auf Unterdruck basiert, können nur die Teile 13, 14 des Leitungssystems diagnostiziert werden, in denen tatsächlich Unterdruck anliegt. Liegt nun ein Defekt im Leitungssystem an der Verbindung 15 zwischen der Venturidüse 151 und der Einleitstelle 152 vor, so bildet sich trotz des Defektes ein Unterdruck in der Venturidüse 151 und daher auch im Tanksystem aus. Das System wird somit nicht als defekt erkannt, obwohl ein Defekt vorliegt und das Kraftstoff/Luft-Gemisch als Kohlenwasserstoffemission an die Umgebung abgegeben wird. Weil die Einleitstelle 152 in der Ansaugstrecke 16 stromaufwärts des Turboladers 162 aber stromabwärts eines Luftmassensensors (Heißfilm-Anemometer (HFM); nicht gezeigt) der Verbrennungskraftmaschine 17 liegt, kann durch eine defekte oder abgefallene Verbindungsleitung 15 außerdem Luft ins Luftzufuhrsystem der Verbrennungskraftmaschine gelangen, die nicht vom Luftmassensensor erfasst wurde. Daher gilt die Konstruktionsvorgabe, dass die Verbindungsleitung 15 untrennbar mit der Venturidüse 151 und der Einleitstelle 152 zwischen dem Luftfilter 161 und dem Turbolader 162 verbunden sein muss und gleichzeitig "unzerstörbar" ausgebildet sein muss. Diese Vorgaben können u.a. aus Packungsgründen nicht immer eingehalten werden.

### Offenbarung der Erfindung

Das erfindungsgemäße Verfahren zur Diagnose eines Tankentlüftungssystem einer Verbrennungskraftmaschine, die einen Turbolader und einen Verdichter aufweist, wobei in der Ansaugstrecke der Verbrennungskraftmaschine vor dem Turbolader und dem Verdichter eine Einleitstelle des Tankentlüftungssystems angeordnet ist, und zwischen der Einleitstelle und einem Tankentlüftungsventil des Tankentlüftungssystems eine Venturidüse angeordnet ist, sieht vor, dass ein Defekt (d. h. insbesondere eine Undichtigkeit) und/oder ein Abfallen der Leitung zwischen der Venturidüse und der Einleitstelle mittels der Änderung mindestens eines Adaptionswertes und/oder eines Korrekturfaktors im Steuergerät der Verbrennungskraftmaschine oder in einem Rechengerät erkannt wird. Der mindestens eine Adaptionswert und/oder Korrekturfaktor ist insbesondere ein Adaptionswert und/oder Korrekturfaktor, der die Kraftstoffgemischbildung der Verbrennungskraftmaschine adaptiert und/oder korrigiert. Dies ermöglicht es erfindungsgemäß, auch einen Defekt in dem Teil des Leitungssystems des Tankentlüftungssystems zu erkennen, in dem kein Unterdruck anliegt. Wenn eine solche Diagnose möglich ist, ist nicht mehr notwendig, die Verbindungsleitung untrennbar mit der Venturidüse und mit der Einleitstelle zwischen dem Luftfilter und dem Turbolader bzw. dem Verdichter zu verbinden, was mehr Freiheitsgrade bei der Konstruktion und Fertigung des Tankentlüftungssystems zur Verfügung stellt. Auch muss die Verbindungsleitung nicht mehr "unzerstörbar" ausgebildet werden. Da Adaptionswerte und/oder Korrekturfaktoren genutzt werden können, welche für den Betrieb der Verbrennungskraftmaschine sowieso ermittelt werden müssen, lässt sich das erfindungsgemäße Verfahren leicht an einer vorhandenen Verbrennungskraftmaschine implementieren.

Insbesondere wird erfindungsgemäß der Adaptionswert und/oder Korrekturfaktor in dem Steuergerät oder Rechengerät gespeichert und ein Defekt und/oder ein Abfallen der Leitung zwischen der Venturidüse und der Einleitstelle wird mittels einer Änderung des Adaptionswertes und/oder des Korrekturfaktors um einen festgelegten Wert zwischen zwei Betriebszyklen der Verbrennungskraftmaschine erkannt. Dies wird erfindungsgemäß insbesondere umgesetzt, indem beim Betrieb der Verbrennungskraftmaschine ein erster Adaptionswert und/oder ein erster Korrekturfaktor bestimmt wird und beim Abschalten der Verbrennungskraftmaschine der erste Adaptionswert und/oder der erste Korrekturfaktor in dem Steuergerät oder Rechengerät gespeichert wird. Beim erneuten Betrieb der Verbrennungskraftmäschine wird ein zweiter Adaptionswert und/oder Korrekturfaktor bestimmt und ein Defekt und/oder ein Abfallen der Leitung zwischen der Venturidüse und der Einleitstelle wird erkannt, wenn der zweite Adaptionswert und/oder Korrekturfaktor sich vom ersten Adaptionswert und/oder Korrekturfaktor mindestens um einen festgelegten Wert unterscheidet.

Erfindungsgemäß eignen sich verschiedene Adaptionswerte oder Korrekturfaktoren zur Diagnose des Tankentlüftungssystems. So kann beispielsweise ein Adaptionswert Am zur multiplikativen Gemischkorrektur herangezogen werden. Weiterhin kann ein Adaptionswert Aₛ zur additiven Gemischkorrektur herangezogen werden. Weiterhin kann ein Korrekturfaktor K zum Massenstromabgleich über der Drosselklappe in der Ansaugstrecke der Verbrennungskraftmaschine herangezogen werden. Schließlich kann ein Adaptionswert Aₛ zur Umrechnung des Saugrohrdrucks in Füllung herangezogen werden. Es ist erfindungsgemäß besonders bevorzugt, im erfindungsgemäßen Verfahren mehrere dieser Werte auf Abweichungen zu überprüfen, um einen Defekt und/oder ein Abfallen der Leitung zwischen der Venturidüse und der Einleitstelle mit besonders hoher Sicherheit zu erkennen, wobei eine Fehlererkennung erfolgt, wenn Abweichungen in allen überprüften Werten vorliegen.

Im Steuergerät oder im Rechengerät können erfindungsgemäß die Werte hinterlegt werden, um die sich ein Adaptionswert und/oder ein Korrekturfaktor mindestens ändern muss, damit ein Fehler der Verbindungsleitung zwischen der Venturidüse und der Einleitstelle in die Ansaugstrecke erkannt wird. Hierbei handelt es sich insbesondere um
- einen Wert ΔAₘ, um den sich ein erster Adaptionswert Aₘ₁ zur multiplikativen Gemischkorrektur von einem zweiten Adaptionswert Aₘ₂ zur multiplikativen Gemischkorrektur unterscheiden muss, damit ein Fehler erkannt wird,
- einen Wert ΔAₐ, um den sich ein erster Adaptionswert Aₐ₁ zur additiven Gemischkorrektur von einem zweiten Adaptionswert Aₐ₂ zur additiven Gemischkorrektur unterscheiden muss, damit ein Fehler erkannt wird,
- einen Wert ΔK, um den sich ein erster Korrekturfaktor K₁ zum Massenstromabgleich über eine Drosselklappe in der Ansaugstrecke der Verbrennungskraftmaschine von einem zweiten Korrekturfaktor K₂ zum Massenstromabgleich über eine Drosselklappe in der Ansaugstrecke der Verbrennungskraftmaschine unterscheiden muss, damit ein Fehler erkannt wird, und
- einen Wert ΔAₛ, um den sich ein erster Adaptionswert Aₛ₁ zur Umrechnung des Saugrohrdrucks in Füllung von einem zweiten Adaptionsfaktor Aₛ₂ zur Umrechnung des Saugrohrdrucks in Füllung unterscheiden muss, damit ein Fehler erkannt wird.

Das erfindungsgemäße Verfahren ermöglicht es auch, zu erkennen, wenn ein bereits erkannter Defekt und/oder ein Abfallen der Leitung zwischen der Venturidüse und der Einleitstelle zwischen zwei Betriebszyklen der Verbrennungskraftmaschine behoben wird (Fehlerheilung).

Ein Computerprogramm kann alle Schritte des erfindungsgemäßen Diagnoseverfahrens ausführen, wenn es auf einem Rechengerät abläuft. Ein Computerprogrammprodukt mit Programmcode, das auf einem maschinenlesbaren Träger gespeichert ist, ermöglicht die Durchführung des erfindungsgemäßen Verfahrens, wenn das Programm auf einem Computer oder einem Steuergerät ausgeführt wird. So kann das erfindungsgemäße Verfahren einfach im Steuergerät einer Verbrennungskraftmaschine implementiert werden.

### Kurze Beschreibung der Zeichnungen

Ein Ausführungsbeispiel der Erfindung ist in den Zeichnungen dargestellt und in der nachfolgenden Beschreibung näher erläutert.
- Fig. 1: zeigt ein Tankentlüftungssystem eines aufgeladenen Benzinmotors gemäß dem Stand der Technik.
- Fig. 2: zeigt ein Verfahrensschema einer Ausführungsform des erfindungsgemäßen Verfahrens zur Diagnose eines Tankentlüftungssystems.

### Ausführungsformen der Erfindung

Fig. 2 zeigt ein Verfahrensschema einer Ausführungsform des erfindungsgemäßen Verfahrens zur Diagnose eines Tankentlüftungssystems, wie es in Fig. 1 dargestellt wird. Im ersten Verfahrensschritt 21 wird zunächst im Steuergerät der Verbrennungskraftmaschine 17 überprüft, ob eine Initialisierung des Steuergeräts erfolgt. Wenn eine solche Initialisierung durchgeführt wird, werden in einem Verfahrensschritt 22 aus einem E²PROM Daten über einen Adaptionswert Aₘ₁ zur multiplikativen Gemischkorrektur, einen Adaptionswert Aₐ₁ zur additiven Gemischkorrektur, einen Korrekturfaktor K₁ zum Massenstromabgleich über eine Drosselklappe 164 in der Ansaugstrecke 16 der Verbrennungskraftmaschine 17 und ein Adaptionswert Aₛ₁ zur Umrechnung des Saugrohrdrucks in Füllung des letzten Betriebszyklus der Verbrennungskraftmaschine 17 in das Steuergerät eingelesen. Ist die Initialisierung bereits abgeschlossen, so wird im nächsten Verfahrensschritt 23 überprüft, ob sich die Verbrennungskraftmaschine 17 im Fahrbetrieb befindet. Ist dies nicht der Fall, so wird in einem weiteren Schritt 24 überprüft, ob eine Abschaltung der Verbrennungskraftmaschine 17 erfolgt. Bei Abschaltung der Verbrennungskraftmaschine 17 werden in einem Verfahrenschritt 25 ein Adaptionswert Aₘ₁ zur multiplikativen Gemischkorrektur, ein Adaptionswert Aₐ₁ zur additiven Gemischkorrektur, ein Korrekturfaktor K₁ zum Massenstromabgleich über eine Drosselklappe in der Ansaugstrecke und ein Adaptionswert Aₛ₁ zur Umrechnung des Saugrohrdrucks in Füllung im E²PROM gespeichert und ersetzen dort die bisher gespeicherten Werte Aₘ₁, Aₐ₁, K₁ und Aₛ₁. Sobald ein Fahrbetrieb erkannt wird, beginnt eine Wertebereichsüberwachung 26. In einem ersten Überwachungsschritt 261 wird der aktuelle Adaptionswert Aₘ₂ zur multiplikativen Gemischkorrektur mit jenem Adaptionswert Aₘ₁ zur multiplikativen Gemischkorrektur verglichen, welcher aus dem E²PROM ausgelesen wurde. Unterscheiden sich diese Werte nicht mindestens um einen festgelegten Wert ΔAₘ, so wird in einem weiteren Verfahrensschritt 27festgestellt, dass die Verbindungsleitung 15 fehlerfrei ist. Andernfalls wird in einem zweiten Überwachungsschritt 262 der aktuelle Adaptionswert Aₐ₂ zur additiven Gemischkorrektur mit jenem Adaptionswert Aₐ₁ zur adaptiven Gemischkorrektur verglichen, welcher aus dem E²PROM ausgelesen wurde. Unterscheiden sich diese Werte nicht mindestens um einen festgelegten Wert ΔAₐ, so wird in dem weiteren Verfahrensschritt 27festgestellt, dass die Verbindungsleitung 15 fehlerfrei ist. Andernfalls wird in einem dritten Überwachungsschritt 263 der aktuelle Korrekturfaktor K₂ zum Massenstromabgleich über eine Drosselklappe 164 in der Ansaugstrecke 16 der Verbrennungskraftmaschine 17 mit jenem Korrekturfaktor K₁ zum Massenstromabgleich verglichen, welcher aus dem E²PROM ausgelesen wurde. Unterscheiden sich diese Korrekturfaktoren nicht mindestens um einen festgelegten Wert ΔK, so wird in dem weiteren Verfahrensschritt 27festgestellt, dass die Verbindungsleitung 15 fehlerfrei ist. Andernfalls wird in einem vierten Überwachungsschritt 264 der aktuelle Adaptionswert Aₛ₂ zur Umrechnung des Saugrohrdrucks in Füllung mit jenem Adaptionswert Aₛ₁ zur Umrechnung des Saugrohrdrucks in Füllung verglichen, welcher aus dem E²PROM ausgelesen wurde. Wenn sich diese Daten nicht mindestens um einen vorher festgelegten Wert ΔAₛ unterscheiden, so wird in dem weiteren Verfahrensschritt 27festgestellt, dass die Verbindungsleitung 15 fehlerfrei ist. Wurde nicht in jedem der vier Überwachungsschritte 261, 262, 263, 264 eine Abweichung des überwachten Adaptionswertes bzw. Korrekturfaktors um mindestens den zugeordneten festgelegten Wert (ΔAₘ, ΔAₐ, ΔK oder ΔAₛ) erkannt, so wird in dem Verfahrensschritt 27 festgestellt, dass die Verbindungsleitung 15 fehlerfrei ist. Das Erkennen einer Abweichung aller überwachten Adaptionswerte bzw. Korrekturfaktoren um mindestens den zugeordneten festgelegten Wert (ΔAₘ, ΔAₐ, ΔK oder ΔAₛ) führt zu einem Fehlereintrag in der On-Board-Diagnose (OBD) der Verbrennungskraftmaschine 17 im Verfahrensschritt 28. Das erfindungsgemäße Diagnoseverfahren wird fortgesetzt, bis die Verbrennungskraftmaschine 17 abgeschaltet wird. Wenn ein Fehlereintrag in der OBD erfolgt ist, und nach erneutem Einschalten der Verbrennungskraftmaschine 17 festgestellt wird, dass die Verbindungsleitung 15 wieder fehlerfrei ist, beispielsweise weil eine Reparatur der Verbindungsleitung erfolgt ist, so wird auch dies in der OBD vermerkt.

Alle Schritte des erfindungsgemäßen Diagnoseverfahrens können beispielsweise von einem Computerprogramm ausgeführt werden, das auf dem Steuergerät der Verbrennungskraftmaschine 17 abläuft.

## Patentansprüche

1. Verfahren zur Diagnose eines Tankentlüftungssystems einer Verbrennungskraftmaschine (17), die einen Turbolader (162) oder einen Verdichter aufweist, wobei in der Ansaugstrecke (16) der Verbrennungskraftmaschine (17) vor dem Turbolader (162) oder dem Verdichter eine Einleitstelle (152) des Tankentlüftungssystems angeordnet ist, und zwischen der Einleitstelle (152) und einem Tankentlüftungsventil (12) des Tankentlüftungssystems eine Venturidüse (151) angeordnet ist,
**dadurch gekennzeichnet, dass**
ein Defekt und/oder ein Abfallen der Leitung (15) zwischen der Venturidüse (151) und der Einleitstelle (152) mittels einer Änderung mindestens eines Adaptionswertes und/oder eines Korrekturfaktors in einem Steuergerät der Verbrennungskraftmaschine (17) oder in einem Rechengerät erkannt wird.

2. Verfahren nach Anspruch 1, **dadurch gekennzeichnet, dass** der mindestens eine Adaptionswert und/oder Korrekturfaktor ein Adaptionswert und/oder Korrekturfaktor ist, der die Kraftstoffgemischbildung der Verbrennungskraftmaschine (17) adaptiert und/oder korrigiert.

3. Verfahren nach Anspruch 1 oder 2, **dadurch gekennzeichnet, dass** der Adaptionswert und/oder Korrekturfaktor in dem Steuergerät oder Rechengerät gespeichert wird und ein Defekt oder ein Abfallen der Leitung (15) zwischen der Venturidüse (151) und der Einleitstelle (152) mittels einer Änderung des Adaptionswertes und/oder des Korrekturfaktors um einen festgelegten Wert zwischen zwei Betriebszyklen der Verbrennungskraftmaschine (17) erkannt wird.

4. Verfahren nach Anspruch 3, **dadurch gekennzeichnet, dass**
- beim Betrieb der Verbrennungskraftmaschine (17) ein erster Adaptionswert Aₘ₁ zur multiplikativen Gemischkorrektur bestimmt wird,
- beim Abschalten der Verbrennungskraftmaschine (17) der erste Adaptionswert Aₘ₁ in dem Steuergerät oder Rechengerät gespeichert wird,
- beim erneuten Betrieb der Verbrennungskraftmaschine (17) ein zweiter Adaptionswert Aₘ₂ zur multiplikativen Gemischkorrektur bestimmt wird, und
- ein Defekt oder ein Abfallen der Leitung (15) zwischen der Venturidüse (151) und der Einleitstelle (152) erkannt wird, wenn sich der zweite Adaptionswert Aₘ₂ vom ersten Adaptionswert Aₘ₁ mindestens um einen festgelegten Wert ΔAₘ unterscheidet.

5. Verfahren nach Anspruch 3 oder 4, **dadurch gekennzeichnet, dass**
- beim Betrieb der Verbrennungskraftmaschine (17) ein erster Adaptionswert Aₐ₁ zur additiven Gemischkorrektur bestimmt wird,
- beim Abschalten der Verbrennungskraftmaschine (17) der erste Adaptionswert Aₐ₁ in dem Steuergerät oder Rechengerät gespeichert wird,
- beim erneuten Betrieb der Verbrennungskraftmaschine (17) ein zweiter Adaptionswert Aₐ₂ zur additiven Gemischkorrektur bestimmt wird, und
- ein Defekt oder ein Abfallen der Leitung (15) zwischen der Venturidüse (151) und der Einleitstelle (152) erkannt wird, wenn sich der zweite Adaptionswert Aₐ₂ vom ersten Adaptionswert Aₐ₁ mindestens um einen festgelegten Wert ΔAₐ unterscheidet.

6. Verfahren nach einem der Ansprüche 3 bis 5, **dadurch gekennzeichnet, dass**
- beim Betrieb der Verbrennungskraftmaschine (17) ein erster Korrekturfaktor K₁ zum Massenstromabgleich über eine Drosselklappe (164) in der Ansaugstrecke (16) der Verbrennungskraftmaschine (17) bestimmt wird,
- beim Abschalten der Verbrennungskraftmaschine (17) der erste Korrekturfaktor K₁ in dem Steuergerät oder Rechengerät gespeichert wird,
- beim erneuten Betrieb der Verbrennungskraftmaschine (17) ein zweiter Korrekturfaktor K₂ zum Massenstromabgleich über die Drosselklappe (164) bestimmt wird, und
- ein Defekt oder ein Abfallen der Leitung (15) zwischen der Venturidüse (151) und der Einleitstelle (152) erkannt wird, wenn sich der zweite Korrekturfaktor K₂ vom ersten Korrekturfaktor K₁ mindestens um einen festgelegten Wert ΔK unterscheidet.

7. Verfahren nach einem der Ansprüche 3 bis 6, **dadurch gekennzeichnet, dass**
- beim Betrieb der Verbrennungskraftmaschine (17) ein erster Adaptionswert Aₛ₁ zur Umrechnung des Saugrohrdrucks in Füllung bestimmt wird,
- beim Abschalten der Verbrennungskraftmaschine (17) der erste Adaptionswert Aₛ₁ in dem Steuergerät oder Rechengerät gespeichert wird,
- beim erneuten Betrieb der Verbrennungskraftmaschine ein zweiter Adaptionswert Aₛ₂ zur Umrechnung des Saugrohrdrucks in Füllung bestimmt wird, und
- ein Defekt oder ein Abfallen der Leitung (15) zwischen der Venturidüse (151) und der Einleitstelle (152) erkannt wird, wenn sich der zweite Adaptionswert Aₛ₂ vom ersten Adaptionswert Aₛ₁ mindestens um einen festgelegten Wert ΔAₛ unterscheidet.

8. Verfahren nach einem der Ansprüche 1 bis 7, **dadurch gekennzeichnet, dass** ein Defekt und/oder ein Abfallen der Leitung (15) zwischen der Venturidüse (151) und der Einleitstelle (152) erkannt wird, wenn eine Änderung von mehr als einem Adaptioriswert und/oder Korrekturfaktor erfolgt.

9. Computerprogramm, das alle Schritte eines Verfahrens nach einem der Ansprüche 1 bis 8 ausführt, wenn es auf einem Rechengerät abläuft.

10. Computerprogrammprodukt mit Programmcode, der auf einem maschinenlesbaren Träger gespeichert ist, zur Durchführung des Verfahrens nach einem der Ansprüche 1 bis 8, wenn das Programm auf einem Computer oder Steuergerät ausgeführt wird.

## Claims

1. Method for diagnosing a tank ventilation system of an internal combustion engine (17) which has a turbo charger (162) or a compressor, wherein an introduction point (152) of the tank ventilation system is arranged upstream of the turbo charger (162) or the compressor in the intake section (16) of the internal combustion engine (17), and a Venturi nozzle (151) is arranged between the introduction point (152) and a tank ventilation valve (12) of the tank ventilation system,
**characterized in that**
a defect and/or dropping off of the line (15) between the Venturi nozzle (151) and the introduction point (152) is detected by means of a change in at least one adaptation value and/or a correction factor in a control unit of the internal combustion engine (17) or in a computing unit.

2. Method according to Claim 1, **characterized in that** the at least one adaptation value and/or correction factor is an adaptation value and/or correction factor which adapts and/or corrects the fuel mixture formation of the internal combustion engine (17).

3. Method according to Claim 1 or 2, **characterized in that** the adaptation value and/or correction factor are/is stored in the control unit or computing unit, and a defect or dropping off of the line (15) between the Venturi nozzle (151) and the introduction point (152) is detected by means of a change in the adaptation value and/or the correction factor by a defined value between two operating cycles of the internal combustion engine (17).

4. Method according to Claim 3, **characterized in that**
- during the operation of the internal combustion engine (17) a first adaptation value Aₘ₁ is determined for multiplicative mixture correction,
- during the switching off of the internal combustion engine (17) the first adaptation value Aₘ₁ is stored in the control unit or computing unit,
- during the renewed operation of the internal combustion engine (17) a second adaptation value Aₘ₂ is determined for multiplicative mixture correction, and
- a defect or dropping off of the line (15) between the Venturi nozzle (151) and the introduction point (152) is detected if the second adaptation value Aₘ₂ differs from the first adaptation value Aₘ₁ by at least a defined value ΔAₘ.

5. Method according to Claim 3 or 4, **characterized in that**
- during the operation of the internal combustion engine (17) a first adaptation value Aₐ₁ is determined for additive mixture correction,
- during the switching off of the internal combustion engine (17) the first adaptation value Aₐ₁ is stored in the control unit or computing unit,
- during the renewed operation of the internal combustion engine (17) a second adaptation value Aₐ₂ is determined for additive mixture correction, and
- a defect or dropping off of the line (15) between the Venturi nozzle (151) and the introduction point (152) is detected if the second adaptation value Aₐ₂ differs from the first adaptation value Aₐ₁ by at least a defined value ΔAₐ.

6. Method according to one of Claims 3 to 5, **characterized in that**
- during the operation of the internal combustion engine (17) a first correction factor K₁ is determined for mass flow adjustment via a throttle valve (164) in the intake section (16) of the internal combustion engine (17),
- during the switching off of the internal combustion engine (17) the first correction factor K₁ is stored in the control unit or computing unit,
- during the renewed operation of the internal combustion engine (17) a second correction factor K₂ is determined for mass flow adjustment via the throttle valve (164), and
- a defect or dropping off of the line (15) between the Venturi nozzle (151) and the introduction point (152) is detected if the second correction factor K₂ differs from the first correction factor K₁ by at least a defined value ΔK.

7. Method according to one of Claims 3 to 6, **characterized in that**
- during the operation of the internal combustion engine (17) a first adaptation value Aₛ₁ is determined for converting the intake manifold pressure into charge,
- during the switching off of the internal combustion engine (17) the first adaptation value Aₛ₁ is stored in the control unit or computing unit,
- during the renewed operation of the internal combustion engine a second adaptation value Aₛ₂ is determined for converting the intake manifold pressure into charge, and
- a defect or dropping off of the line (15) between the Venturi nozzle (151) and the introduction point (152) is detected if the second adaptation value Aₛ₂ differs from the first adaptation value Aₛ₁ by at least a defined value ΔAₛ.

8. Method according to one of Claims 1 to 7, **characterized in that** a defect and/or dropping off of the line (15) between the Venturi nozzle (151) and the introduction point (152) is detected if a change occurs in more than one adaptation value and/or correction factor.

9. Computer program which executes all the steps of a method according to one of Claims 1 to 8 when said computer program runs on a computing unit.

10. Computer program product with program code which is stored on a machine-readable carrier, for carrying out the method according to one of Claims 1 to 8 when the program is executed on a computer or control unit.

## Revendications

1. Procédé de diagnostic d'un système de purge de réservoir d'un moteur à combustion interne (17), comportant un turbocompresseur (162) ou un compresseur, un point d'introduction (152) du système de purge de réservoir étant disposé dans le tronçon d'aspiration (16) du moteur à combustion interne (17), avant le turbocompresseur (162) ou le compresseur, et une buse de Venturi (151) étant disposée entre le point d'introduction (152) et une soupape de purge de réservoir (12) du système de purge de réservoir, **caractérisé en ce qu'**un défaut et/ou une panne de la conduite (15) entre la buse de Venturi (151) et le point d'introduction (152) est détecté en faisant varier au moins une valeur d'adaptation et/ou un facteur de correction dans un appareil de commande du moteur à combustion interne (17) ou dans un calculateur.

2. Procédé selon la revendication 1, **caractérisé en ce que** l'au moins une valeur d'adaptation et/ou un facteur de correction est une valeur d'adaptation et/ou un facteur de correction adaptant et/ou corrigeant la formation de mélange de carburant du moteur à combustion interne (17).

3. Procédé selon la revendication 1 ou 2, **caractérisé en ce que** la valeur d'adaptation et/ou le facteur de correction est mémorisé dans l'appareil de commande ou le calculateur et qu'un défaut ou une panne de la conduite (15) est détecté entre la buse de Venturi (151) et le point d'introduction (152) en faisant varier la valeur d'adaptation et/ou le facteur de correction d'une valeur déterminée entre deux cycles de fonctionnement du moteur à combustion interne (17).

4. Procédé selon la revendication 3, **caractérisé en ce que** :
- lors du fonctionnement du moteur à combustion interne (17), une première valeur d'adaptation Aₘ₁ est définie pour servir de correction de mélange par multiplication ;
- lors de la déconnexion du moteur à combustion interne (17), la première valeur d'adaptation Aₘ₁ est mémorisée dans l'appareil de commande ou le calculateur ;
- lors du refonctionnement du moteur à combustion interne (17), une deuxième valeur d'adaptation Aₘ₂ est définie pour servir de correction de mélange par multiplication ; et
- un défaut ou une panne de la conduite (15) entre la buse de Venturi (151) et le point d'introduction (152) est détecté lorsque la deuxième valeur d'adaptation Aₘ₂ se différentie de la première valeur d'adaptation Aₘ₁, au moins d'une valeur déterminée ΔAₘ.

5. Procédé selon la revendication 3 ou 4, **caractérisé en ce que** :
- lors du fonctionnement du moteur à combustion interne (17), une première valeur d'adaptation Aₐ₁ est définie pour servir de correction de mélange par addition ;
- lors de la déconnexion du moteur à combustion interne (17), la première valeur d'adaptation Aₐ₁ est mémorisée dans l'appareil de commande ou le calculateur ;
- lors du refonctionnement du moteur à combustion interne (17), une deuxième valeur d'adaptation Aₐ₂ est définie pour servir de correction de mélange par addition ; et
- un défaut ou une panne de la conduite (15) entre la buse de Venturi (151) et le point d'introduction (152) est détecté lorsque la deuxième valeur d'adaptation Aₐ₂ se différentie de la première valeur d'adaptation Aₐ₁, au moins d'une valeur déterminée ΔAₐ.

6. Procédé selon l'une quelconque des revendications 3 à 5, **caractérisé en ce que** :
- lors du fonctionnement du moteur à combustion interne (17), un premier facteur de correction K₁ est défini pour servir d'équilibrage de débit massique via un clapet d'étranglement (164) dans le tronçon d'aspiration (16) du moteur à combustion interne (17) ;
- lors de la déconnexion du moteur à combustion interne (17), le premier facteur de correction K₁ est mémorisé dans l'appareil de commande ou le calculateur ;
- lors du refonctionnement du moteur à combustion interne (17), un deuxième facteur de correction K₂ est défini pour servir d'équilibrage de débit massique via le clapet d'étranglement (164) ; et
- un défaut ou une panne de la conduite (15) entre la buse de Venturi (151) et le point d'introduction (152) est détecté lorsque le deuxième facteur de correction K₂ se différentie du premier facteur de correction K₁ d'au moins d'une valeur déterminée ΔK.

7. Procédé selon l'une quelconque des revendications 3 à 6, **caractérisé en ce que** :
- lors du fonctionnement du moteur à combustion interne (17), une première valeur d'adaptation A_{S1} est définie pour recalculer la pression de tube d'aspiration lors du remplissage ;
- lors de la déconnexion du moteur à combustion interne (17), la première valeur d'adaptation A_{S1} est mémorisée dans l'appareil de commande ou le calculateur ;
- lors du refonctionnement du moteur à combustion interne, une deuxième valeur d'adaptation A_{S2} est définie pour recalculer la pression de tube d'aspiration lors du remplissage et
- un défaut ou une panne de la conduite (15) entre la buse de Venturi (151) et le point d'introduction (152) est détecté lorsque la deuxième valeur d'adaptation A_{S2} se différentie de la première valeur d'adaptation A_{S1}, au moins d'une valeur déterminée ΔA_{S}.

8. Procédé selon l'une quelconque des revendications 1 à 7, **caractérisé en ce qu'**un défaut et/ou une panne de la conduite (15) entre la buse de Venturi (151) et le point d'introduction (152) est détecté en cas de variation supérieure à une valeur d'adaptation et/ou un facteur de correction.

9. Programme informatique, exécutant toutes les étapes d'un procédé selon l'une quelconque des revendications 1 à 8 lorsqu'il est utilisé sur un calculateur.

10. Produit de programme informatique, avec un code de programmation mémorisé sur un support lisible par machine, afin d'exécuter le procédé selon l'une quelconque des revendications 1 à 8 lorsque le programme est utilisé sur un ordinateur ou un appareil de commande.
